# EUROPEAN PATENT SPECIFICATION

(11) **EP 1 820 278 B1**
(45) Date of publication and mention of the grant of the patent: **06.08.2008**
(21) Application number: 05792423.5
(22) Date of filing: 26.08.2005
(51) Int. Cl.: H04B 1/38, G06K 7/00

(54) **SIM CARD RETAINING DEVICE**
SIM-KARTEN-ZURÜCKHALTEEINRICHTUNG
DISPOSITIF DE RETENUE DE CARTE SIM

(30) Priority: 03.12.2004 US 3113
(43) Date of publication of application: 22.08.2007
(73) Proprietor: Sony Ericsson Mobile Communications AB, 221 88 Lund (SE)
(72) Inventor: SHIFLETT, Jamie C., Durham, NC 27713 (US)
(74) Representative: HOFFMANN EITLE
(86) International application number: PCT/US2005/030524
(87) International publication number: WO 2006/062562

(56) References cited:
- WO-A-00/76282
- US-A- 5 615 260
- US-A- 6 053 748

## Description

### BACKGROUND

The present invention relates generally to wireless communications devices, and particularly to wireless communications devices that use SIM cards.

A Subscriber identity Module (SIM) is a small card-like device that stores information used to identify a mobile subscriber. In addition, SIM cards may also store other user information such as text messages and entries for a phone book. Because of their small, standardized size, subsribers can easily transfer their SIM card between cellular telephones simply by removing it from one phone and intstalling it into another. In this manner, subscribers can easily move their wireless account from one cellular telephone to another without losing their information and, In some cases, without having to change phone numbers. SIMs are most widely used in cellular telephones that communicate over GSM wireless communications systems, but compatible modules are available for other systems as well, such as Universal Mobile Telecommunications System (UMTS).

The Personal Computer Memory Card International Association (PCMCIA) is an industry trade association that creates standards for computer peripheral devices. Perhaps one of the most widely known and used devices is a PC card (also known as a PCMCIA card), although recent developments have led to even smaller devices known as NewCards, ExpressCards, and Mini ExpressCards. Originally, these devices were used to expand the memory of a computing device. However, some devices now permit subscribers to employ their notebook or laptop computing devices as celllular communications devices. In these cases, a subscriber may simply mate his or her SIM card with a PC card, for example, in order to register with and communicate over a wireless communications system.

Most wireless communications devices that use SIMs (e.g., cellular telephones, laptop/notebook computers having PC cards) typically have some kind of retention mechanism that prevents the SIM from falling out of Its slot once it is inserted. Conventional retention mechanisms have included spring-loaded clips that slide over a surface of the SIM once the SIM is installed. However, these comprise movable parts that may break and represent additional manufacturing costs. Accordingly, a new method of retaining SIMs in devices such as PC cards is needed.

WO 00/76282 discloses a plug-in card for electronic equipment. The card includes a metallic housing having a slot through which a user may insert a SIM card. The metallic housing does not have retaining members to retain the SIM card. Instead, to retain the SIM card against SIM contacts on a printed circuit board (PCB), it is relied on the electrical components disposed on the PCB, stops formed on the metallic housing, and on the sidewalls of the slot.

### SUMMARY

The present invention discloses a mechanism that retains a SIM used in a wireless communication device. In one embodiment, a communications assembly comprises a printed circuit board and an RF shield. The printed circuit board includes circuitry that permits a user to communicate over a wireless communications system, and a SIM contact. The RF shield includes one or more retaining members integrally formed on and extending from a surface of the RF shield. When assembled, the RF shield is disposed in spaced relation to a surface of the printed circuit board having the SIM contact. This defines an opening that slidingly receives the SIM.

When the SIM is inserted into the opening, the one or more retaining members formed on the surface of the RF shield exert a pressing force on a surface of the SIM. This presses contacts on an opposing surface of the SIM into electrical contact with the SIM contact disposed on the surface of the printed circuit board. It also applies a tension force that resists the removal of the SIM through the opening thereby protecting the SIM card against inadvertent removal. To remove the SIM, a subscriber places a finger into an indentation formed in the RF shield and manually pushes on one edge of the SIM. Once the subscriber's pushing force overcomes the tension force exerted on the SIM by the retaining members, the SIM moves back through the opening.

### BRIEF DESCRIPTION OF THE DRAWINGS

Figure 1 illustrates an exploded view of one embodiment of the communications assembly according to one embodiment of the present invention.
Figure 2 illustrates a perspective view of an assembled communications assembly according to one embodiment of the present invention where the SIM is extracted from the assembly.
Figure 3 illustrates a perspective view of an assembled communications assembly according to one embodiment of the present invention where the SIM is inserted into the assembly.
Figure 4A illustrates a perspective view of an RF shield according to one embodiment of the present invention.
Figure 4B illustrates a perspective view of an indentation formed in the RF shield that permits a subscriber to extract the SIM from the communications assembly according to one embodiment of the present invention.
Figure 4C illustrates a perspective edge view of the communications assembly to illustrate a retaining member according to one embodiment of the present invention.
Figures 5A and 5B illustrate perspective views of the RF shield and communications assembly to illustrate a retaining member according to an alternate embodiment of the present invention.
Figures 6A and 6B illustrate perspective views of the RF shield and communications assembly to illustrate a retaining member according to another alternate embodiment of the present invention. assembly to illustrate a retaining member according to yet another alternate embodiment of the present invention.
Figure 8 illustrates a wireless communications over which a subscriber may communicate using a computing device configured according to one embodiment of the present invention.

### DETAILED DESCRIPTION

Turning now to the Figures, a communications assembly according to one embodiment of the present invention is shown therein and indicated generally by the number 10. The figures and the following description refer to the assembly as a PC card 10. As used herein, the term "PC card" refers generally to a plug-in type card assembly, such as PCMCIA cards, PC cards, NewCards, ExpressCards, and Mini ExpressCards, that may be used to facilitate communications in computing devices. However, those skilled in the art will appreciate that the present invention may be used in any communications card assembly capable of receiving a SIM.

PC card 10 comprises an RF shield 20 and a printed circuit board (PCB) 40. PCB 40 comprises communications circuitry 42, one or more contacts 44, and a SIM contact 46. Other electrical components may or may not be included on PCB 40 as is known in the art. Communications circuitry 42 permits a device, such as a laptop computing device, to communicate with remote parties over a wireless communications system. Subscribers may slidingly insert a SIM card 50 or like device into PC card 10 such that contacts on a surface of SIM 50 come into electrical contact with SIM contact 46 disposed on a surface of PCB 40. A communications program or other software included on the subscriber's device may then send and receive messages to register and/or authenticate the subscriber with the wireless communications system as is known in the art. Once registered and/or authenticated, the subscriber may dial the phone numbers to place outgoing calls or recive incoming calls as is known in the art.

Communications circuitry 42 may include a variety of electronic components that, in concert with other electronic components, permit a subscriber to transmit and receive cellular signals to and from one or more base stations (not shown) in the wireless communications network. Communications circuitry 42 may operate according to any known standard, including but not limited to Global System for Mobile Communications (GSM), TIA/EIA-136, cdmaOne, cdma2000, UMTS, and Wideband CDMA.

SIM 50, as stated above, is a small, card-like device that may comprise a controller, memory, and I/O circuits as known in the art. Typically, SIM 50 performs most if not all operations necessary for communications based on information it stores in memory. This the registration and authorization process, user-defined data such as a phone book, and text messages. The size of a slot in which SIM 50 may be inserted is standardized by GSM standards. Some SIMs may be as small as 25mm x 15mm. This small, standardized size permits subsribers to easily transfer SIM 50 between PC cards 10 simply by removing it from one PC card 10 and intstalling it into another.

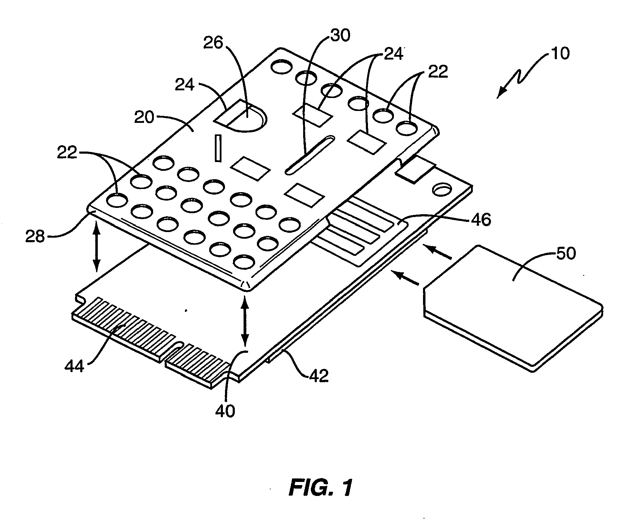

RF shield 20, according to one embodiment of the present invention, is a metallic, unitary structure that prevents RF leakage from PC card 10. It also protects circuitry on PC card 10 from electrical noise that may be generated from any adjacent electrical components disposed in a subscriber's wireless communications device. As seen in Figure 1, RF shield 20 may include one or more holes 22, one or more windows 24, an indentation 26, a sidewall 28, and a retaining member 30.

Holes 22 generally are cutouts in the RF shield 20. Holes 22 provide ventilation and airflow for electrical components disposed on a surface of PCB 40, as well as allow persons or equipment to access the components both during and after the manufacturing process. Windows 24 are also cutouts in RF shield 20, and permit users to visually see a portion of a SIM card 50 when it is inserted into the PC card 10. Indentation 26 is integrally formed with RF shield 20, and may or may not be placed adjacent one edge of a window 24. Indentation 26 is generally sized to receive a portion of a subscriber's finger. A subscriber wishing to remove an inserted SIM 50 may place his or her finger into indentation 26, and manually apply a force to an edge of SIM 50 to push or slide SIM 50 out of PC card 10.

RF shield 20 may also include a sidewall 28 that extends generally perpendicularly from the periphery of RF shield 20. When assembled, sidewall 28 contacts a surface of PCB 40. As will be described later in more detail, sidewall 28 maintains RF shield in spaced relation to PCB 40 to define an opening through which SIM 50 may be inserted and removed. It should be noted that the Figures illustrate sidewall 28 as extending substantially completely around the periphery of RF shield 20. However, this particular configuration is not required. Sidewall 28 may extend only partially around the periphery of RF shield 20, or it may extend completely around RF shield 20. In addition, RF shield 20 may include more than one sidewall 28, or may include posts or other like components to maintain RF shield in spaced relation to PCB 40.

Retaining member 30 is integrally formed with RF shield 20, such that retaining member 30 and RF shield 20 form a unitary structure. In this embodiment, retaining member 30 is stamped or pressed into RF shield 20 such that it forms a depression in RF shield 20. However, this is not required as the present invention also contemplates an embodiment where retaining member 30 is a component that is distinct from RF shield 20. In embodiments where retaining member 30 and RF shield are separate components, which is shown and described in later figures, retaining member 30 is attached or otherwise connected to a surface of RF shield 20 by soldering or gluing retaining member 30 to the surface of RF shield 20. As used herein, retaining member 30 is "integrally" formed with RF shield 20 regardless of whether retaining member 30 is formed as a depression or indentation in RF shield 20, or is separate from and later connected to RF shield 20.

According to the present invention, retaining member 30 extends from a surface of RF shield 20 towards SIM contact 46 disposed on PCB 40. In one embodiment, retaining member 30 is sized such that it is approximately .005 inches or less than the height of RF shield 20; however, these dimensions are for illustrative purposes only. Regardless of its size and/or dimensions, retaining member 30 extends towards PCB 40 such that the distance beween SIM contact 46 and retaining member 30 is generally less than the height of SIM 50. This permits retaining member 30 to provide a resistance against inserting and extracting SIM 50 from PC card 10. It also provides a pressing force on a surface of an inserted SIM 50 so that a contact on an opposing surface of SIM 50 maintains good electrical contact with SIM contact 46 on PCB 40. In addition, this also permits retaining member 30 to exert tension on the inserted SIM 50 to prevent SIM 50 from being inadvertantly extracted from PC card 10.

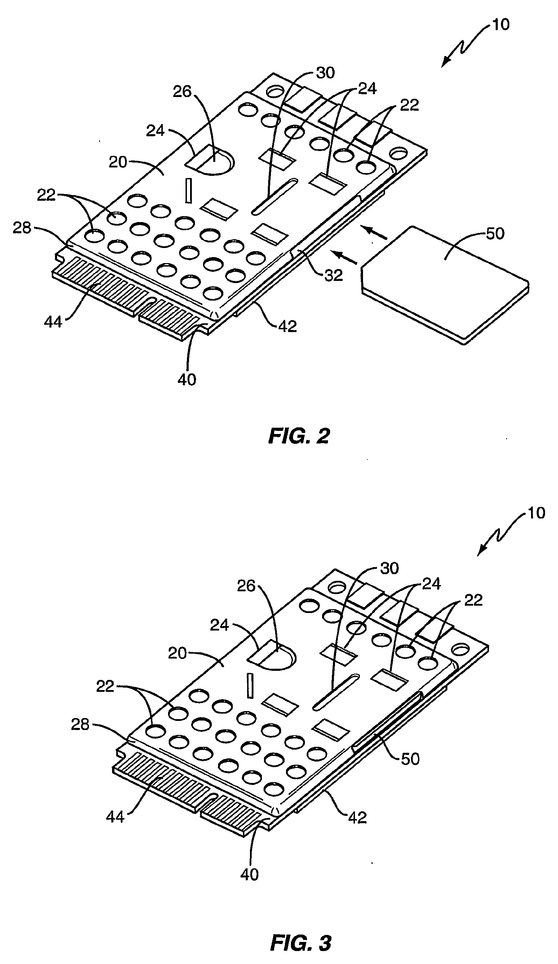

Figures 2 and 3 illustrate one embodiment of the present invention wherein RF shield 20 and PCB 40 are assembled to form PC card 10. When assembled, PC card 10 is approximately the size of a credit card. Currently, different sizes of PC cards 10 exist - each varying in thickness. Type I cards, for example, are approximately 3.3mm thick, while type II and type III cards are approximately 5.0mm thich and 10.5mm thick, respectively. Regardless of the type of card, most PC cards 10 are 85.6mm long and 54.0mm wide, although any size and/or dimension may be used as desired.

When assembled, PC card 10 may be inserted into a subscriber's wireless communications device by mating contacts 44 with a corresponding slot in the communications device. While not specifically shown in the Figures, these corresponding slots typically connect PC card 10 to a PCMCIA type bus. Depending upon the number and type of contacts 44, PC card 10 may mate with a 16-bit bus, or a 32-bit bus, such as the 32-bit 33 MHz PCI bus available in many of today's notebook and laptop computers. However, those skilled in the art will readily appreciate that these aforementioned busses are merely illustrative, and a PC card 10 configured according to the present invention may mate with and communicate signals over any known bus.

As seen in Figures 2 and 3, RF shield 20 is in spaced relation to PCB 40. This defines an opening 32 that receives SIM 50. Thus, SIM 50 may be slidingly inserted through opening 32 (Figure 3), and slidingly removed through opening 32 (Figure 2). The dimensions of opening 32 may be any size desired; however, in one embodiment, opening 32 conforms to the size specified by GSM standards. When SIM 50 is inserted into opening 32, retaining member 30 against the SIM contact 46. To remove SIM 50, the subscriber needs only to place a finger, for example, into indentation 26 and apply a force to the edge of SIM 50 to slide SIM 50 back through the opening 32.

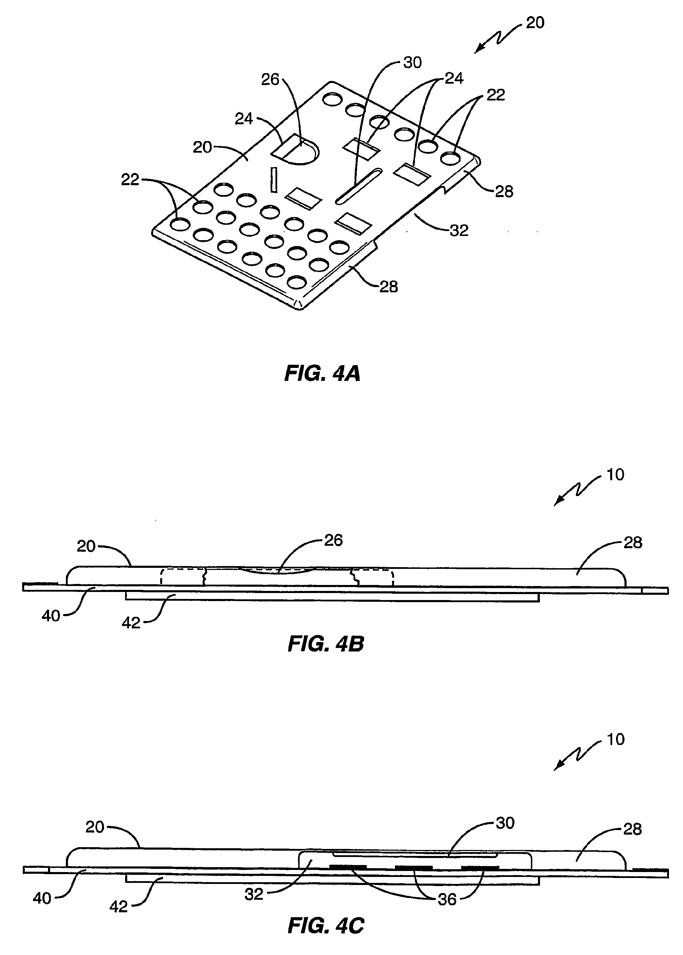

Figures 4A-4C illustrate perspective views of the RF shield 20, the indentation 26, and the retaining member 30, respectively. As seen in Figures 4A and 4B, indentation 26 is formed as a depression in RF shield 20. Likewise, Figures 4A and 4C illustrate retaining member 30 as being formed as a depression across a length of RF shield 20. In this embodiment, however, indentation 26 differs from retaining member 30 in that indentation 26 allows a finger to extend through RF shield 20 to contact the edge of SIM 50 when SIM 50 is inserted through opening 32.

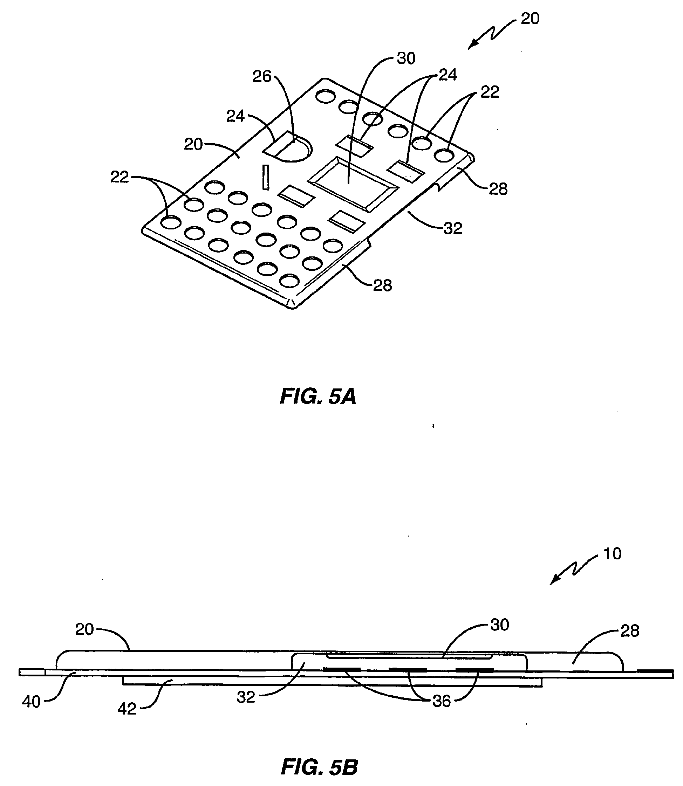

Figures 5A and 5B illustrate an alternate embodiment of the present invention. In this embodiment, retaining member 30, while still being formed integrally with RF shield 20, contacts a greater surface area of SIM 50 when SIM 50 is inserted into opening 32. It should be noted that in this embodiment, retaining member 30 still exerts a force on the surface of SIM 50 that retains SIM 50 in the opening 32, and causes the contact disposed on the opposing surface of SIM 50 to maintain good electrical contact with SIM contact 46.

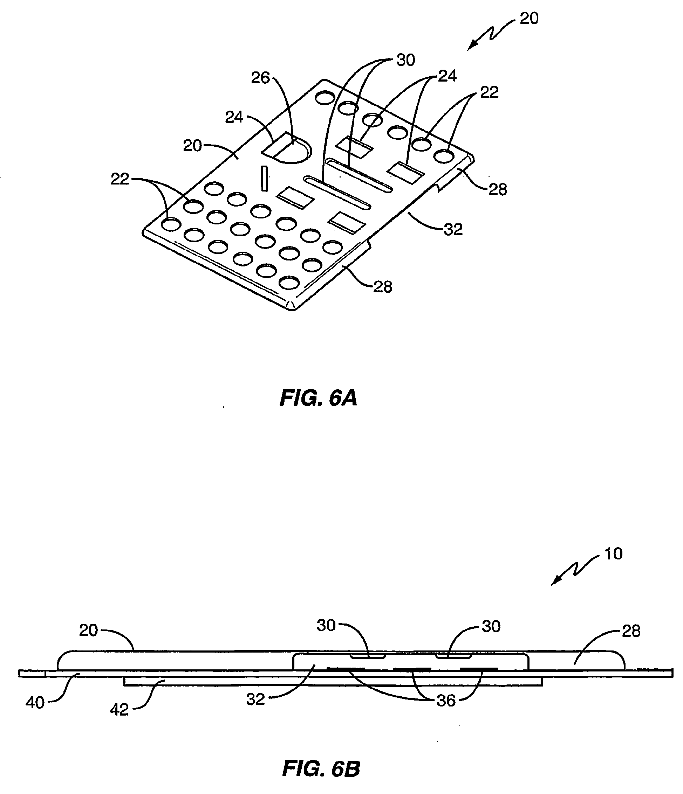

Figures 6A and 6B illustrate another alternate embodiment wherein RF shield 20 includes a plurality of retaining members 30 formed integrally with RF shield 20. In this embodiment, retaining members 30 are formed as depressions such that they contact the inserted SIM 50 proximate either edge of SIM 50. This permits retaining members 30 to exert the force on the surface of SIM 50 more evenly. As in the previous embodiments, retaining members 30 exert a force on the surface of inserted SIM 50 to retain SIM 50 in the opening 32. The exerted force also causes contacts on the opposing surface of SIM 50 to maintain good electrical contact with SIM contact 46 disposed on PCB 40.

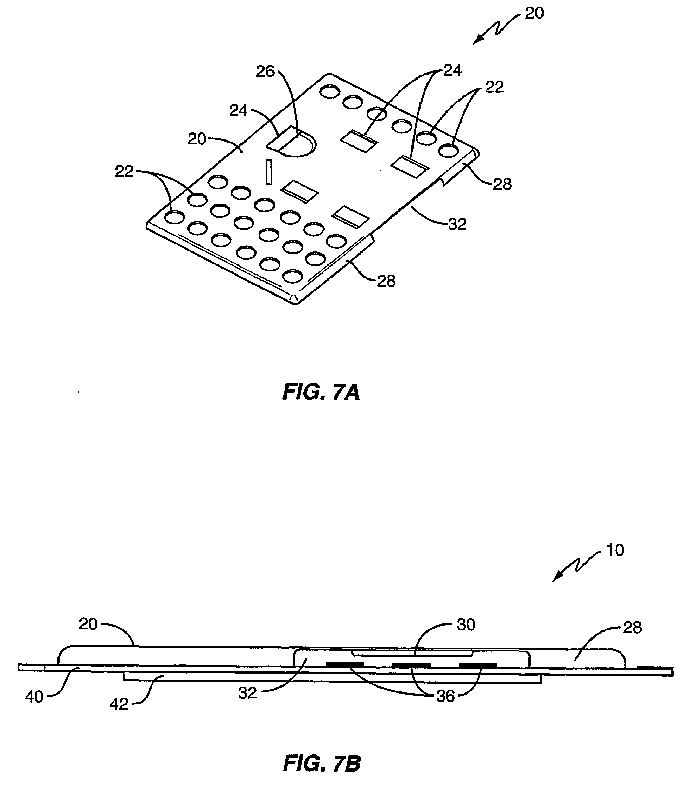

As previously noted, it is not necessary for the retaining members 30 to be formed as depressions in RF shield 20. Retaining member 30 may be separate components that are soldered, glued, or otherwise attached to an undersurface of RF shield 20 during the manufacturing process. As seen in Figure 7A, the top surface of RF shield 20 does not include a depression. Figure 7B, however, illustrates retaining member 30 attached to the undersurface of RF shield 20. Regardless of how retaining member 30 is formed, it remains integral with RF shield 20, and exerts a force on SIM 50 as stated above.

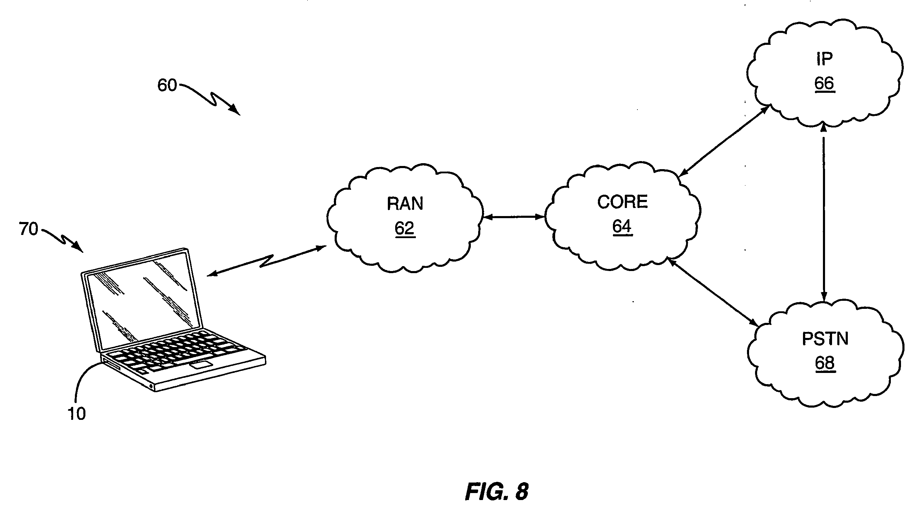

Figure 8 illustrates one possible network configuration 60 in which a wireless communications device including PC card 10 of the present invention may operate. In this embodiment, PC card 10 having SIM 50 inserted therein is included in a notebook computing device 70. The subscriber may communicate with remote parties via a Radio Access Network (RAN) 62, which may be, for example, a GSM network. RAN 62 also interconnects device 70 to Core network 64 further connects device 70 to an IP network 66, such as the Internet, and a public circuit-switched network, such as PSTN 68.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A RF shield (20) for a communications assembly (10) In a wireless communications device, the RF shield (20) comprising:
first and second opposing surfaces;
a sidewall (28) to dispose the second surface in spaced relation to a printed circuit board (40), and to define an opening (32) between the printed circuit board (40) and the second surface to receive a SIM card (50), the printed circuit board (40) having communications circuitry (42) and a SIM contact (46) disposed thereon, wherein the communications circuitry (42) allows a user of the wireless communication device to communicate RF signals with a communication network;
**and characterized by:**
one or more retaining members (30) integral with and extending from the second surface to retain the SIM card (50) in the opening (32) and against the contact (46) disposed on the printed circuit board (40).

2. The RF shield of claim 1 wherein the sidewall (28) extends to contact the printed circuit board (40).

3. The RF shield of claim 1 wherein the one or more retaining members (30) exert a force on a surface of the SIM card (50) to retain an opposing surface of the SIM card (50) against the contact (46).

4. The RF shield of claim 3 wherein the one or more retaining members (30) are depressions integrally formed with the RF shield (20).

5. The RF shield of claim 3 wherein the one or more retaining members (30) comprise one or more extending members connected to the second surface of the RF shield (20).

6. The RF shield of claim 1 further comprising an indentation (26) integrally formed in the RF shield (20) to permit a user to remove the SIM card (50) from the opening (32).

7. A wireless communications device comprising:
communications circuitry to facilitate communications with a wireless communications network; and
a plug-in communications card (10) including:
a printed circuit board (40) having a SIM contact (46) and communications circuitry (42) disposed thereon, wherein the communications circuitry (42) allows a user of the wireless communication device to communicate RF signals with a communication network;
an RF shield (20) disposed in spaced relation to the printed circuit board (40) to electrically shield the communications circuitry (42), and to define an opening (32) between the printed circuit board (40) and the RF shield (20) to receive a SIM card (50);
**and characterized by:**
one or more retaining members (30) integral with and extending from the RF shield (20) to retain the SIM card (50) in the opening (32) and against the contact (46).

8. The wireless communications device of claim 7 wherein the RF shield (20) includes a sidewall (28) that extends to contact a surface of the printed circuit board (40).

9. The wireless communications device of claim 7 wherein the one or more retaining members (30) exert a force on a surface of the SIM card (50) that retains an opposing surface of the SIM card (50) against the SIM contact (46).

10. The wireless communications device of claim 9 wherein the one or more retaining members (30) are depressions integrally formed with the RF shield (20).

11. The wireless communications device of claim 9 wherein the one or more retaining members (30) comprise one or more extending members connected to the second surface of the RF shield (20).

12. The wireless communications device of claim 7 further comprising an indentation (26) integrally formed with the RF shield (20) to permit a user to extract the SIM card (50) from the opening (32).

13. The wireless communications device of claim 7 wherein the plug-in card (10) comprises a PCMCIA card.

14. The wireless communications device of claim 7 wherein the plug-in card (10) comprises a PCI Express card.

15. The wireless communications device of claim 7 wherein the plug-in card (10) comprises a PCI MiniExpress card.

16. A method of retaining a SIM card (50) in a wireless communications device, the method comprising:
extending one or more retaining members (30) from a surface of an RF shield (20);
disposing the RF shield (20) in spaced relation to a printed circuit board (40) to electrically shield communications circuitry (42) disposed on the printed circuit board (40), and to define an opening (32) between the RF shield (20) and the printed circuit board (40) to receive a SIM card (50);
**and characterized by:**
using the one or more retaining members (30) to retain the SIM card (50) in the opening (32) and against a contact (46) disposed on the printed circuit board (40) when the SIM card (50) is inserted into the opening (32).

17. The method of claim 16 wherein extending one or more retaining members (30) from a surface of an RF shield (20) comprises integrally forming the one or more retaining members (30) as depressions in the RF shield (20).

18. The method of claim 16 wherein extending one or more retaining members (30) from a surface of an RF shield (20) comprises connecting the retaining members (30) to the surface of the RF shield (20).

19. The method of claim 16 wherein disposing the RF shield (20) in spaced relation to a printed circuit board (40) comprises contacting a surface of the printed circuit board (40) with a sidewall (28) that extends from the periphery of the RF shield (20).

20. The method of claim 16 wherein disposing the RF shield (20) In spaced relation to a printed circuit board (40) comprises disposing the one or more retaining members (30) in spaced relation to the contact (46).

21. The method of claim 16 wherein using the one or more retaining members (30) to retain the SIM card (50) against a contact (46) comprises pressing a surface of the SIM card (50) with the one or more retaining members (30) to force an opposing surface of the SIM card (50) against the contact (46).

22. The method of claim 16 further comprising integrally forming an indentation (26) in the RF shield (20) to permit a user to remove the SIM card (50) from the opening (32).

## Patentansprüche

1. HF-Abschirmung (20) für eine Kommunikationsbaugruppe (10) in einer Drahtloskommunikationsvorrichtung, wobei die HF-Abschirmung (20) umfasst:
erste und zweite gegenüberliegende Oberflächen;
eine Seitenwand (28), um die zweite Oberfläche mit Abstand in Bezug zu einer Leiterplatte (40) anzuordnen, und um eine Öffnung (32) zwischen der Leiterplatte (40) und der zweiten Oberfläche zu definieren, um eine SIM-Karte (50) aufzunehmen, wobei die Leiterplatte (40) eine Kommunikationsschaltungsanordnung (42) und einen SIM-Kontakt (46) darauf angeordnet hat, wobei die Kommunikationsschaltungsanordnung (42) einem Benutzer der Drahtloskommunikationsvorrichtung ein Kommunizieren von HF-Signalen mit einem Kommunikationsnetzwerk ermöglicht;
**und gekennzeichnet durch:**
ein oder mehrere Halteglieder (30), die integral mit der zweiten Oberfläche ausgestaltet sind und sich von dieser erstrecken, um die SIM-Karte (50) in der Öffnung (32) und gegen den auf der Leiterplatte (40) angeordneten Kontakt (46) zu halten.

2. HF-Abschirmung von Anspruch 1, wobei die Seitenwand (28) sich zum Kontaktieren der Leiterplatte (40) erstreckt.

3. HF-Abschirmung von Anspruch 1, wobei das eine oder die mehreren Halteglieder (30) eine Kraft auf eine Oberfläche der SIM-Karte (50) ausüben, um eine gegenüberliegende Oberfläche der SIM-Karte (50) gegen den Kontakt (46) zu halten.

4. HF-Abschirmung von Anspruch 3, wobei das eine oder die mehreren Halteglieder (30) mit der HF-Abschirmung (20) integral ausgeprägte Absenkungen sind.

5. HF-Abschirmung von Anspruch 3, wobei das eine oder die mehreren Halteglieder (30) ein oder mehrere mit der zweiten Oberfläche der HF-Abschirmung (20) verbundene Streckglieder umfassen.

6. HF-Abschirmung von Anspruch 1 mit ferner einer Vertiefung (26), die integral in der HF-Abschirmung (20) ausgebildet ist, um einem Benutzer das Entfernen der SIM-Karte (50) aus der Öffnung (32) zu erlauben.

7. Drahtloskommunikationsvorrichtung mit:
einer Kommunikationsschaltungsanordnung, um Kommunikationen mit einem Drahtloskommunikationsnetzwerk zu ermöglichen; und
einer Einsteck-Kommunikationskarte (10) mit:
einer Leiterplatte (40), die einen SIM-Kontakt (46) und eine Kommunikationsschaltungsanordnung (42) darauf angeordnet hat, wobei die Kommunikationsschaltungsanordnung (42) einem Benutzer der Drahtloskommunikationsvorrichtung es ermöglicht, HF-Signale mit einem Kommunikationsnetzwerk zu kommunizieren;
einer HF-Abschirmung (20), die mit Abstand zu der Leiterplatte (40) angeordnet ist, um die Kommunikationsschaltungsanordnung (42) elektrisch abzuschirmen, und um eine Öffnung (32) zwischen der Leiterplatte (40) und der HF-Abschirmung (20) zu definieren, um eine SIM-Karte (50) zu aufzunehmen;
**und gekennzeichnet durch:**
ein oder mehrere Halteglieder (30), die integral mit der HF-Abschirmung (20) ausgestaltet sind und sich von dieser erstrecken, um die SIM-Karte (50) in der Öffnung (32) und gegen den Kontakt (46) zu halten.

8. Drahtloskommunikationsvorrichtung von Anspruch 7, wobei die HF-Abschirmung (20) eine Seitenwand (28) enthält, die sich zum Kontaktieren einer Oberfläche der Leiterplatte (40) erstreckt.

9. Drahtloskommunikationsvorrichtung von Anspruch 7, wobei das eine oder die mehreren Halteglieder (30) eine Kraft auf eine Oberfläche der SIM-Karte (50) ausüben, die eine gegenüberliegende Oberfläche der SIM-Karte (50) gegen den SIM-Kontakt (46) hält.

10. Drahtloskommunikationsvorrichtung von Anspruch 9, wobei das eine oder die mehreren Halteglieder (30) integral mit der HF-Abschirmung (20) ausgebildete Absenkungen sind.

11. Drahtloskommunikationsvorrichtung von Anspruch 9, wobei das eine oder die mehreren Halteglieder (30) ein oder mehrere mit der zweiten Oberfläche der HF-Abschirmung (20) verbundene Streckglieder umfassen.

12. Drahtloskommunikationsvorrichtung von Anspruch 7 mit ferner einer Vertiefung (26), die integral mit der HF-Abschirmung (20) ausgebildet ist, um es einem Benutzer zu erlauben, die SIM-Karte (50) aus der Öffnung (32) zu extrahieren.

13. Drahtloskommunikationsvorrichtung von Anspruch 7, wobei die Einsteckkarte (10) eine PCMCIA-Karte umfasst.

14. Drahtloskommunikationsvorrichtung von Anspruch 7, wobei die Einsteckkarte (10) eine PCI-Express-Karte umfasst.

15. Drahtloskommunikationsvorrichtung von Anspruch 7, wobei die Einsteckkarte (10) eine PCI-MiniExpress-Karte umfasst.

16. Verfahren zum Halten einer SIM-Karte (50) in einer Drahtloskommunikationsvorrichtung, wobei das Verfahren umfasst:
Erstrecken von einem oder mehreren Haltegliedern (30) von einer Oberfläche einer HF-Abschirmung (20);
Anordnen der HF-Abschirmung (20) mit Abstand zu einer Leiterplatte (40), um eine Kommunikationsschaltungsanordnung (42) elektrisch abzuschirmen, die auf der Leiterplatte (40) angeordnet ist, und um eine Öffnung (32) zwischen der HF-Abschirmung (20) und der Leiterplatte (40) zu definieren, um eine SIM-Karte (50) aufzunehmen;
**und gekennzeichnet durch:**
Verwenden des einen oder der mehreren Halteglieder (30), um die SIM-Karte (50) in der Öffnung (32) und gegen einen Kontakt (46) zu halten, der auf der Leiterplatte (40) angeordnet ist, wenn die SIM-Karte (50) in die Öffnung (32) eingesetzt ist.

17. Verfahren von Anspruch 16, wobei das Erstrecken von einem oder mehreren Haltegliedern (30) von einer Oberfläche einer HF-Abschirmung (20) ein integrales Ausbilden des einen oder der mehreren Halteglieder (30) als Absenkungen in der HF-Abschirmung (20) umfasst.

18. Verfahren von Anspruch 16, wobei das Erstrecken von einem oder mehreren Haltegliedern (30) von einer Oberfläche einer HF-Abschirmung (20) ein Verbinden der Halteglieder (30) mit der Oberfläche der HF-Abschirmung (20) umfasst.

19. Verfahren von Anspruch 16, wobei das Anordnen der HF-Abschirmung (20) mit Abstand zu einer Leiterplatte (40) ein Kontaktieren einer Oberfläche der Leiterplatte (40) mit einer Seitenwand (28) umfasst, die sich von der Peripherie der HF-Abschirmung (20) erstreckt.

20. Verfahren von Anspruch 16, wobei das Anordnen der HF-Abschirmung (20) mit Abstand zu einer Leiterplatte (40) ein Anordnen des einen oder der mehreren Halteglieder (30) mit Abstand zu dem Kontakt (46) umfasst.

21. Verfahren von Anspruch 16, wobei das Verwenden des einen oder der mehreren Halteglieder (30), um die SIM-Karte (50) gegen einen Kontakt (46) zu halten, ein Drücken einer Oberfläche der SIM-Karte (50) mit dem einen oder den mehreren Haltegliedern (30) umfasst, um eine gegenüberliegende Oberfläche der SIM-Karte (50) gegen den Kontakt (46) zu zwingen.

22. Verfahren von Anspruch 16 mit ferner einem integralen Ausbilden einer Vertiefung (26) in der HF-Abschirmung (20), um einem Benutzer das Entfernen der SIM-Karte (50) aus der Öffnung (32) zu erlauben.

## Revendications

1. Blindage RF (20) pour un assemblage de communications (10) dans un dispositif de communications sans fil, le blindage RF (20) comprenant:
une première et une deuxième surfaces opposées;
une paroi latérale (28) pour disposer la deuxième surface dans une relation espacée par rapport à une carte de circuit imprimé (40), et pour définir une ouverture (32) entre la carte de circuit imprimé (40) et la deuxième surface pour recevoir une carte SIM (50), la carte de circuit imprimé (40) ayant un ensemble de circuits de communications (42) et un contact SIM (46) disposé par dessus, où l'ensemble de circuits de communications (42) permet à un utilisateur du dispositif de communication sans fil de communiquer des signaux RF avec un réseau de communication;
**et caractérisé par**
un ou une pluralité d'éléments de retenue (30) solidaires et en prolongement de la deuxième surface pour maintenir la carte SIM (50) dans l'ouverture (32) et contre le contact (46) disposé sur la carte de circuit imprimé (40).

2. Blindage RF de la revendication 1 dans lequel la paroi latérale (28) s'étend pour rentrer en contact avec la carte de circuit imprimé (40).

3. Blindage RF de la revendication 1 dans lequel le ou les éléments de retenue (30) exercent une force sur une surface de la carte SIM (50) pour maintenir une surface opposée de la carte SIM (50) contre le contact (46).

4. Blindage RF de la revendication 3 dans lequel le ou les éléments de retenue (30) sont des dépressions formées intégralement avec le blindage RF (20).

5. Blindage RF de la revendication 3 dans lequel le ou les éléments de retenue (30) comprennent un ou une pluralité d'éléments en prolongement reliés à la deuxième surface du blindage RF (20).

6. Blindage RF de la revendication 1 comprenant en plus un enfoncement (26) formé intégralement dans le blindage RF (20) pour permettre à un utilisateur de retirer la carte SIM (50) de l'ouverture (32).

7. Dispositif de communications sans fil comprenant:
un ensemble de circuits de communications pour faciliter des communications avec un réseau de communications sans fil; et
une carte de communications enfichable (10) incluant:
une carte de circuit imprimé (40) ayant un contact SIM (46) et un ensemble de circuits de communications (42) disposés par dessus, où l'ensemble de circuits de communications (42) permettent à un utilisateur du dispositif de communications sans fil de communiquer des signaux RF avec un réseau de communication;
un blindage RF (20) disposé dans une relation espacée par rapport à la carte de circuit imprimé (40) pour blinder électriquement l'ensemble de circuits de communications (42), et pour définir une ouverture (32) entre la carte de circuit imprimé (40) et le blindage RF (20) pour recevoir une carte SIM (50);
**et caractérisé par**
un ou une pluralité d'éléments de retenue (30) solidaires et en prolongement du blindage RF (20) pour maintenir la carte SIM (50) dans l'ouverture (32) et contre le contact (46).

8. Dispositif de communications sans fil de la revendication 7 dans lequel le blindage RF (20) comporte une paroi latérale (28) qui s'étend pour rentrer en contact avec une surface de la carte de circuit imprimé (40).

9. Dispositif de communications sans fil de la revendication 7 dans lequel le ou les éléments de retenue (30) exercent une force sur une surface de la carte SIM (50) qui maintient une surface opposée de la carte SIM (50) contre le contact SIM (46).

10. Dispositif de communications sans fil de la revendication 9 dans lequel le ou les éléments de retenue (30) sont des dépressions formées intégralement avec le blindage RF (20).

11. Dispositif de communications sans fil de la revendication 9 dans lequel le ou les éléments de retenue (30) comprennent un ou plusieurs éléments en prolongement reliés à la deuxième surface du blindage RF (20).

12. Dispositif de communications sans fil de la revendication 7 comprenant en plus un enfoncement (26) formé intégralement avec le blindage RF (20) pour permettre à un utilisateur de retirer la carte SIM (50) de l'ouverture (32).

13. Dispositif de communications sans fil de la revendication 7 dans lequel la carte enfichable (10) comprend une carte PCMCIA.

14. Dispositif de communications sans fil de la revendication 7 dans lequel la carte enfichable (10) comprend une carte PCI Express.

15. Dispositif de communications sans fil de la revendication 7 dans lequel la carte enfichable (10) comprend une carte Mini PCI Express.

16. Procédé de maintien d'une carte SIM (50) dans un dispositif de communications sans fil, le procédé comprenant le fait de:
prolonger un ou une pluralité d'éléments de retenue (30) à partir d'une surface d'un blindage RF (20);
disposer le blindage RF (20) dans une relation espacée par rapport à une carte de circuit imprimé (40) pour blinder électriquement un ensemble de circuits de communications (42) disposés sur la carte de circuit imprimé (40), et pour définir une ouverture (32) entre le blindage RF (20) et la carte de circuit imprimé (40) pour recevoir une carte SIM (50);
**et caractérisé par le fait de**
utiliser le ou les plusieurs éléments de retenue (30) pour maintenir la carte SIM (50) dans l'ouverture (32) et contre un contact (46) disposé sur la carte de circuit imprimé (40) lorsque la carte SIM (50) est insérée dans l'ouverture (32).

17. Procédé de la revendication 16 dans lequel le fait de prolonger le ou les éléments de retenue (30) à partir d'une surface d'un blindage RF (20) comprend le fait de former intégralement le ou les éléments de retenue (30) comme des dépressions dans le blindage RF (20).

18. Procédé de la revendication 16 dans lequel le fait de prolonger un ou plusieurs éléments de retenue (30) à partir d'une surface d'un blindage RF (20) comprend le fait de relier les éléments de retenue (30) à la surface du blindage RF (20).

19. Procédé de la revendication 16 dans lequel le fait de disposer le blindage RF (20) dans une relation espacée par rapport à une carte de circuit imprimé (40) comprend le fait de mettre en contact une surface de la carte de circuit imprimé (40) avec une paroi latérale (28) qui se prolonge de la périphérie du blindage RF (20).

20. Procédé de la revendication 16 dans lequel le fait de disposer le blindage RF (20) dans une relation espacée par rapport à une carte de circuit imprimé (40) comprend le fait de disposer le ou les éléments de retenue (30) dans une relation espacée par rapport au contact (46).

21. Procédé de la revendication 16 dans lequel le fait d'utiliser le ou les éléments de retenue (30) pour maintenir la carte SIM (50) contre un contact (46) comprend le fait d'appuyer sur une surface de la carte SIM (50) avec le ou les éléments de retenue (30) pour forcer une surface opposée de la carte SIM (50) contre le contact (46).

22. Procédé de la revendication 16 comprenant en plus le fait de former intégralement un enfoncement (26) dans le blindage RF (20) pour permettre à un utilisateur de retirer la carte SIM (50) de l'ouverture (32).
